# EUROPÄISCHE PATENTSCHRIFT

(11) **EP 0 624 509 B1**
(45) Veröffentlichungstag und Bekanntmachung des Hinweises auf die Patenterteilung: **26.03.1997**
(21) Anmeldenummer: 94105780.4
(22) Anmeldetag: 14.04.1994
(51) Int. Cl.: B62B 3/10

(54) **Von Hand bewegbarer Transportwagen, insbesondere Einkaufswagen**
Handcarts especially shopping carts
Chariots de transport à main en particulier des chariots de transport de marchandises

(30) Priorität: 08.05.1993 DE 4315399
(43) Veröffentlichungstag der Anmeldung: 17.11.1994
(73) Patentinhaber: Wanzl GmbH & Co. Entwicklungs-KG, D-89336 Leipheim (DE)
(72) Erfinder: Wanzl, Rudolf, D-89340 Leipheim (DE)

(56) Entgegenhaltungen:
- GB-A- 2 078 633
- US-A- 3 309 100

## Beschreibung

Die Erfindung betrifft einen von Hand bewegbaren Transportwagen, insbesondere einen Einkaufswagen, der eine Kindersitzeinrichtung aufweisen kann und dessen mit vorderen und hinteren Rollen ausgestattetes, aus zusammensteckbaren Bauteilen gebildetes Fahrgestell wenigstens ein Behältnis und/oder mindestens eine Ablage zur Aufnahme von Ware trägt, wobei das Fahrgestell zwei zur Aufnahme von vorderen und oberen Holmen bestimmte, mit Anschlußstellen für die vorderen und oberen Holme ausgestattete Verbindungsknoten aufweist und wobei von den Anschlußstellen je ein vorderer Holm zu einer der vorderen Rollen und je ein oberer Holm nach oben zum Behältnis führt.

Transportwagen dieser Art sind in der französischen Patentschrift 1.480.361 sowie in der deutschen Gebrauchsmusterschrift G 88 04 327.4 näher beschrieben.

Es ist üblich, als Einkaufswagen gestaltete Transportwagen möglichst mit Kindersitzeinrichtungen auszustatten, so daß Kleinkinder in solchen Wagen beim Einkauf mitgeführt werden können. Bestehende Sicherheitsvorschriften fordern, daß mit Kindersitzeinrichtungen ausgestattete Transportwagen eine gewisse Mindeststandsicherheit aufweisen müssen, um die Gefahr des Kippens auszuschließen. Diese Gefahr wird größer, je kleiner und leichter solche Transportwagen gestaltet sind. Letzteres auf die eingangs zum Stand der Technik genannten Transportwagen übertragen läßt die Befürchtung entstehen, daß kleine Transportwagen dieser Art sehr leicht zum Kippen nach rückwärts neigen, wenn mit ihnen ein Kleinkind transportiert werden soll. Ein Versetzen der hinteren Rollen noch weiter nach hinten, damit eine größere Standsicherheit erreicht wird, ist jedoch aufgrund der festgelegten Form der bekannten Verbindungsknoten nicht möglich. Dies kann als Nachteil angesehen werden.

Es ist Aufgabe der Erfindung, einen Transportwagen der gattungsgemäßen Art so zu gestalten, daß es auf einfache Weise möglich ist, im Bedarfsfalle das Fahrgestell so zu verändern, daß eine ausreichende Standsicherheit des Transportwagens insbesondere nach hinten erzielbar ist.

Die Aufgabe ist erfindungsgemäß dadurch gelöst, daß an jedem Verbindungsknoten eine weitere Anschlußstelle vorgesehen ist und daß diese Anschlußstellen zur Aufnahme je eines hinteren Holmes bestimmt sind, die zu den hinteren Rollen führen.

Es ist von Vorteil, daß nunmehr Holme von den Verbindungsknoten auch nach rückwärts zu den hinteren Rollen führen. Dadurch entsteht ein Transportwagen, der nach rückwärts eine große Standsicherheit aufweist. Kinder lassen sich mit solchen Transportwagen sicher transportieren.
Es ist ferner in vorteilhafter Weise möglich, die zu den hinteren Rollen führenden Holme des Fahrgestelles je nach Größe und Gewicht des Transportwagens unterschiedlich lang zu gestalten. Man kann deshalb schwere Transportwagen mit kürzeren Holmen ausstatten, während leichte Transportwagen längere Holme erfordern, um die gleiche Sicherheit gegen rückwärtiges Kippen zu erreichen.
Aus geometrischen Gründen kann es sich als vorteilhaft erweisen, wenn jeder Verbindungsknoten aus zwei Hälften besteht, die mit Hilfe gegenseitiger Verzahnungen um eine gemeinsame horizontale Achse verstellbar und anschließend aneinanderliegend arretierbar sind. Dabei befinden sich gewöhnlich die Anschlußstellen für jene Holme, die zu den vorderen Rollen und zum Behältnis führen an der einen Hälfte und die Anschlußstelle für einen Holm, der zu einer hinteren Rolle gerichtet ist, an der anderen Hälfte eines jeden Verbindungsknotens.

Die Erfindung wird anhand einiger Ausführungsbeispiele näher erläutert. Es zeigt
- Fig. 1: einen als Einaufswagen gestalteten Transportwagen mit einer Kindersitzeinrichtung;
- Fig. 2 und Fig. 3: zwei unterschiedliche Fahrgestelle;
- Fig. 4 und Fig. 5: zwei Verbindungsknoten sowie
- Fig. 6: einen zweigeteilten Verbindungsknoten.

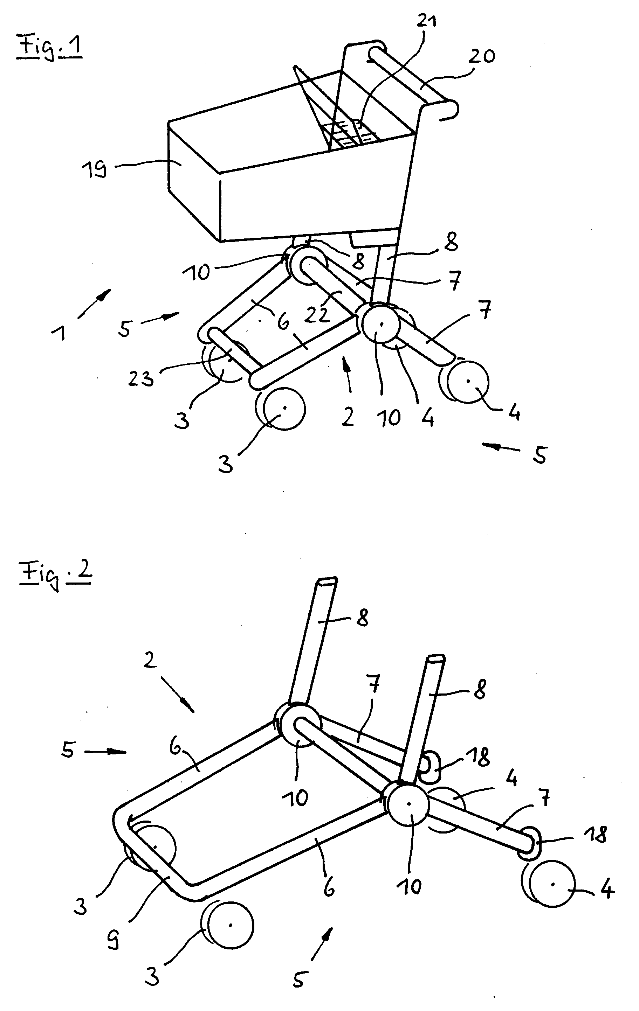

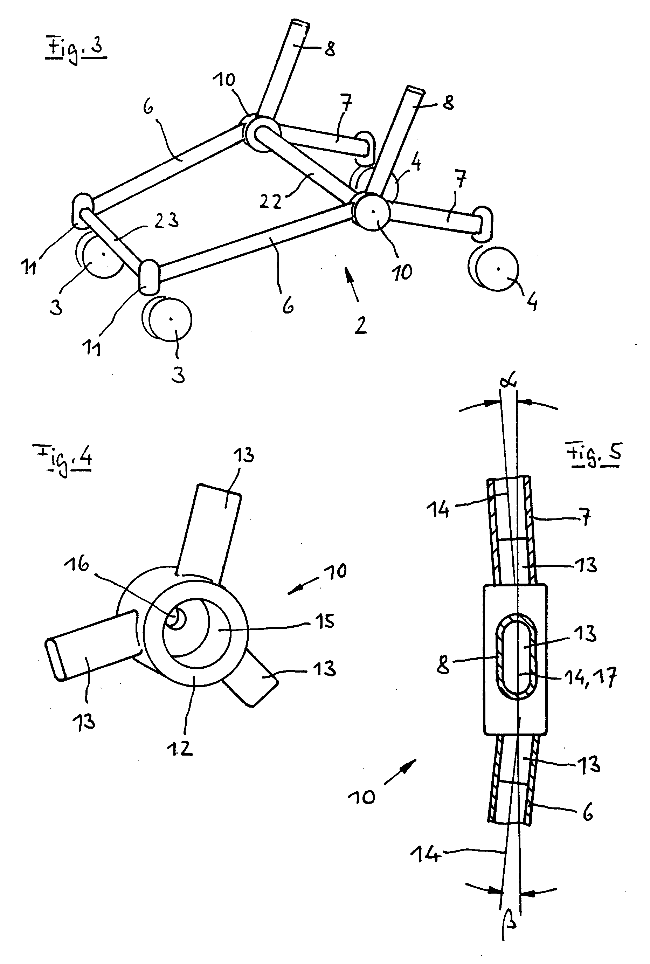

Der in Fig. 1 dargestellte, als Einkaufswagen gestaltete Transportwagen 1 weist ein Fahrgestell 2 auf, das mit zwei vorderen und zwei hinteren Rollen 3, 4 bestückt ist. Das Fahrgestell 2 trägt einen als Korb ausgebildeten Behälter 19 zur Aufnahme von Ware. Es können in bekannter Weise weitere, nicht näher dargestellte Behälter 19 und/oder mindestens eine weitere, nicht dargestellte Ablage zum Warentransport angeordnet sein, wobei die mindestens eine Ablage als ladeplattformartiges Gebilde bevorzugt im unteren Bereich des Fahrgestelles 2 vorgesehen ist. Sowohl das Fahrgestell 1, als auch der wenigstens eine Behälter 19 nebst möglichen Ablagen sind in ebenfalls bekannter Weise so gestaltet, daß es möglich ist, gleiche Transportwagen 1 platzsparend ineinanderzuschieben. Eine Schiebeeinrichtung 20 ist entweder am Behälter 19 oder am Fahrgestell 2 vorgesehen. Gleiches gilt für eine Kindersitzeinrichtung 21, die ebenfalls in bekannter Weise entweder im oder außerhalb des Behälters 19 angeordnet sein kann. Das Fahrgestell 2 besteht aus zusammensteckbaren Bauteilen. Es weist zwei Verbindungsknoten 10 auf, die sich an den Längsseiten 5 des Fahrgestelles 2 befinden und die zwischen den vorderen und hinteren Rollen 3, 4 angeordnet sind. Die Verbindungsknoten 10, vgl. Figuren 4, 5 und 6, sind mit Anschlußstellen 13 ausgestattet und ausgehend von den Anschlußstellen 13 streben zwei vordere Holme 6 zu den vorderen Rollen 3, zwei obere Holme 8 nach oben, um das Behältnis 19 zu tragen und im Sinne der Erfindung zwei hintere Holme 7 zu den hinteren Rollen 4. Um eine ausreichende Stabilität des Fahrgestelles 2 zu erhalten, ist es zweckmäßig, sowohl die vorderen Enden der vorderen Holme 6, als auch die Verbindungsknoten 10 durch Querverbindungsteile 22, 23 ortsfest miteinander zu verbinden.

Das in Fig. 2 dargestellte Fahrgestell 2 weist an jeder Längsseite 5 einen zwischen den vorderen und hinteren Rollen 3, 4 angeordneten Verbindungsknoten 10 auf. Ausgehend von den Verbindungsknoten 10 führen zwei vordere Holme 6 nach vorne zu den vorderen Rollen 3, wobei sich die vorderen Holme 6 zu einem bügelförmigen Träger 9 vereinigen. Die vorderen Rollen 3 sind mit geeigneten Mitteln wie Laschen, Gewindebolzen oder dergleichen am Träger 9 befestigt. Man erkennt in der Zeichnung die von den Verbindungsknoten 10 ausgehenden, nach oben gerichteten oberen Holme 8. Ebenfalls ausgehend von den beiden Verbindungsknoten 10 streben zwei hintere Holme 7 nach rückwärts zu den hinteren Rollen 4. Die hinteren Holme 7 münden in zwei Rollenhalter 18, an welchen die hinteren Rollen 4 befestigt sind.

Eine weitere Variante eines Fahrgestelles 2 zeigt Fig. 3. Im Gegensatz zu dem in Fig. 2 gezeigten Beispiel münden die vorderen Holme 6 in zwei Rollenhalter 11. Die nicht näher beschriebenen Rollenhalter 11 tragen die vorderen Rollen 3 und sind durch ein bevorzugt aufsteckbares Querverbindungsteil 23 verbunden. Alle weiteren das Fahrgestell 2 bildenden Teile sind entsprechend dem in Fig. 2 gezeigten Ausführungsbeispiel gestaltet, wobei es bei beiden Ausführungsbeispielen sinnvoll ist, die Verbindungsknoten 10 mit einem Querverbindungsteil 22 verdrehsicher zu verbinden.

Fig. 4 zeigt einen Verbindungsknoten 10 in räumlicher Darstellung. Der Verbindungsknoten 10 weist einen Zentralkörper 12 auf, an dem drei zapfenartige Anschlußstellen 13 angeformt sind, die in verschiedene Richtungen weisen. Die rohrförmigen vorderen, hinteren und oberen Holme 6, 7, 8, siehe Fig. 3, werden bei der Montage des Fahrgestelles 2 auf die zapfenartigen Anschlußstellen 13 form- und kraftschlüssig aufgesetzt. Am Zentralkörper 12 befindet sich eine quer zu den Anschlußstellen 13 angeordnete Vertiefung 15, die zur form- und verdrehsicheren Aufnahme des Endes eines Querverbindungsteiles 22 vorgesehen ist. In der Stirnwand der Vertiefung 15 ist bevorzugt eine weitere Öffnung 16 zum Durchstecken von geeignetem Befestigungsmaterial vorgesehen, so daß mit Hilfe des Querverbindungsteiles 22 und der Befestigungsmittel die beiden Verbindungsknoten 10 gegeneinander verspannt werden können. Anstelle der zapfenartigen Anschlußstellen 13 können als Vertiefungen ausgebildete Anschlußstellen 13 vorgesehen sein, in welche stabförmig gestaltete vordere, hintere und obere Holme 6, 7, 8 einsteckbar sind.

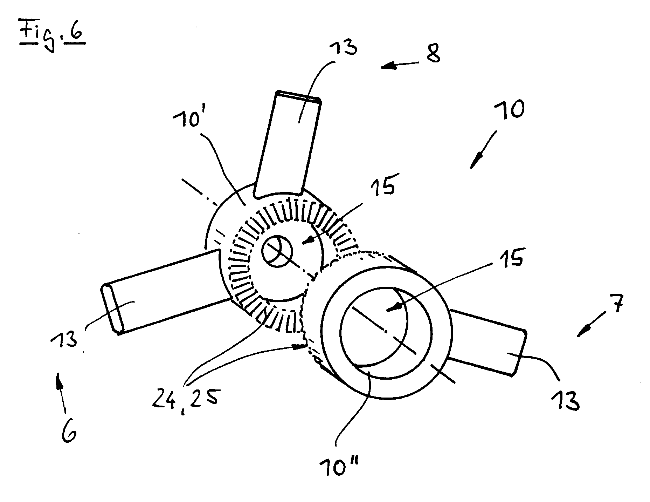

In einer Draufsicht zeigt Fig. 5 einen Verbindungsknoten 10 mit aufgesetzten vorderen, hinteren und oberen Holmen 6, 7, 8. Es bleibt dem jeweiligen Anwendungsfall überlassen, ob die Längsachsen 14 der Anschlußstellen 13 -und damit diese letztendlich selbst- auf einer gemeinsamen Ebene 17 angeordnet sind, oder teilweise auf der Ebene 17 oder außerhalb dieser gedachten Ebene 17 angeordnet sind. Legt man beim dargestellten Verbindungsknoten 10 eine Ebene 17 durch die mittig angeordnete Anschlußstelle 13, so weichen die beiden anderen Anschlußstellen 13 von der Ebene 17 ab, was in der Zeichnung durch die beiden Winkel α und β verdeutlicht wird. Die Verbindungsknoten 10 sind als Formteile gestaltet und bevorzugt aus Kunststoff oder Metall gefertigt.

Anhand einer Explosionszeichnung zeigt Fig. 6 einen zweigeteilten Verbindungsknoten 10. Jede Hälfte 10', 10'' weist an gegenüberliegenden senkrechten Flächen 24 Erhöhungen und Vertiefungen in der bevorzugten Form einer Verzahnung 25 auf. Eine der beiden Hälften 10' oder 10'', in der Zeichnung ist es die links abgebildete Hälfte 10', trägt die Anschlußstellen 13 für einen vorderen Holm 6, der zu einer vorderen Rolle 3 führt und für einen oberen Holm 8, der zum Behältnis 19 gerichtet ist. Die andere, in der Zeichnung rechts abgebildete Hälfte 10'' trägt die Anschlußstelle 13 für einen hinteren Holm 7, der zu einer hinteren Rolle 4 führt. Alle anderen baulichen Merkmale des Verbindungsknotens 10 sowie dessen Einbindung in das Fahrgestell 2, entsprechen jenen Merkmalen, wie sie anhand der Beispiele gemäß Fig. 1 bis 5 bereits beschrieben worden sind. Wie bei den einstückigen Verbindungsknoten 10, so sind auch bei zweigeteilten Verbindungsknoten 10 jeweils ein rechter und ein linker Verbindungsknoten 10 erforderlich. In montiertem Zustand sind beide Hälften 10', 10'', einen Verbindungsknoten 10 bildend, so verschraubt, daß sie mit ihren Flächen 24 gegeneinander gepreßt sind und die Verzahnungen 25 ineinandergreifen, so daß sich die Hälften 10', 10'' gegenseitig arretieren. Mit zweigeteilten Verbindungsknoten 10 läßt sich die Form des Fahrgestelles 2 durch abschnittweises Drehen und anschließendes Arretieren der Hälften 10', 10'' verändern.

## Patentansprüche

1. Von Hand bewegbarer Transportwagen (1), insbesondere Einkaufswagen, der eine Kindersitzeinrichtung (21) aufweisen kann und dessen mit vorderen und hinteren Rollen (3, 4) ausgestattetes, aus zusammensteckbaren Bauteilen gebildetes Fahrgestell (2) wenigstens ein Behältnis (19) und/oder mindestens eine Ablage zur Aufnahme von Ware trägt, wobei das Fahrgestell (2) zwei zur Aufnahme von vorderen und oberen Holmen (6, 8) bestimmte, mit Anschlußstellen (13) für die vorderen und oberen Holme (6, 8) ausgestattete Verbindungsknoten (10) aufweist und wobei von den Anschlußstellen (13) je ein vorderer Holm (6) zu einer der vorderen Rollen (3) und je ein oberer Holm (8) nach oben zum Behältnis (19) führt, dadurch **gekennzeichnet,** daß an jedem Verbindungsknoten (10) eine weitere Anschlußstelle (13) vorgesehen ist und diese Anschlußstellen (13) zur Aufnahme je eines hinteren Holmes (7) bestimmt sind, die zu den hinteren Rollen (4) führen.

2. Transportwagen nach Anspruch 1, dadurch **gekennzeichnet,** daß die hinteren Holme (7) in zwei Rollenhalter (18) münden, welche die hinteren Rollen (4) tragen.

3. Transportwagen nach Anspruch 1 oder 2, dadurch **gekennzeichnet,** daß die vorderen Holme (6) in zwei Rollenhalter (11) münden, welche die vorderen Rollen (3) tragen.

4. Transportwagen nach einem der Ansprüche 1 bis 3, dadurch **gekennzeichnet,** daß die vorderen Holme (6) zu einem bügelförmigen Träger vereinigt sind.

5. Transportwagen nach einem der Ansprüche 1 bis 3, dadurch **gekennzeichnet,** daß die Rollenhalter (11) durch ein aufsteckbares Querverbindungsteil (23) verbunden sind.

6. Transportwagen nach einem der Ansprüche 1 bis 5, dadurch **gekennzeichnet,** daß die an den Verbindungsknoten (10) befindlichen Anschlußstellen (13) zapfenartig gestaltet sind.

7. Transportwagen nach einem der Ansprüche 1 bis 6, dadurch **gekennzeichnet,** daß die an den Verbindungsknoten (10) befindlichen Anschlußstellen (13) durch Vertiefungen gebildet sind.

8. Transportwagen nach einem der Ansprüche 1 bis 7, dadurch **gekennzeichnet,** daß die Anschlußstellen (13) entweder auf einer gemeinsamen Ebene (17), oder teilweise auf einer gemeinsamen Ebene (17) oder auf unterschiedlichen Ebenen angeordnet sind.

9. Transportwagen nach einem der Ansprüche 1 bis 8, dadurch **gekennzeichnet,** daß jeder Verbindungsknoten (10) aus zwei Hälften (10', 10'') besteht und jede Hälfte (10', 10'') eine Verzahnung (25) aufweist, wobei in montiertem Zustand der Hälften (10', 10'') deren Flächen (24) aneinanderliegen und die Verzahnungen (25) ineinandergreifen.

10. Transportwagen nach einem der Ansprüche 1 bis 9, dadurch **gekennzeichnet,** daß an einer Hälfte (10' oder 10'') die Anschlußstellen (13) für die vorderen und oberen Holme (6 und 8) und an der anderen Hälfte (10' oder 10'') die Anschlußstelle 13 für einen hinteren Holm (7) vorgesehen sind.

11. Transportwagen nach einem der Ansprüche 1 bis 10, dadurch **gekennzeichnet,** daß die Verbindungsknoten (10) eine Vertiefung (15) zur Aufnahme eines Querverbindungsteiles (22) aufweisen.

12. Transportwagen nach einem der Ansprüche 1 bis 11, dadurch **gekennzeichnet,** daß die Verbindungsknoten (10) durch das Querverbindungsteil (22) verdrehsicher verbunden sind.

## Claims

1. A hand-operated trolley (1), in particular a shopping trolley, which can be provided with a child seat arrangement (21) and which has a wheel frame (2) provided with front and rear casters (3, 4) and formed from plug-in components and carrying at least one receptacle (19) and/or at least one shelf for holding goods, wherein the wheel frame (2) has two connecting nodes (10) for receiving front and upper longitudinal members (6, 8) and provided with connecting points (13) for the front and upper longitudinal members (6, 8) and wherein, from each connecting point (13), a front longitudinal member (6) leads to one of the front casters (3) and an upper longitudinal member (8) leads upwards to the receptacle (19), characterised in that a further connecting point (13) is provided on each connecting node (10) and these connecting points (13) are each intended to receive a rear longitudinal member (7) leading to the rear casters (4).

2. A trolley according to claim 1, characterised in that the rear longitudinal members (7) end in two caster holders (18) carrying the rear casters (4).

3. A trolley according to claim 1 or 2, characterised in that the front longitudinal members (6) end in two caster holders (11) carrying the front casters (3).

4. A trolley according to any one of claims 1 to 3, characterised in that the front longitudinal members (6) are connected to form a U-shaped support.

5. A trolley according to any one of claims 1 to 3, characterised in that the caster holders (11) are connected by a plug-in transverse connecting member (23).

6. A trolley according to any one of claims 1 to 5, characterised in that the connecting points (13) on the connecting nodes (10) are formed in the manner of plugs.

7. A trolley according to any one of claims 1 to 6, characterised in that the connecting points (13) on the connecting nodes (10) are formed by recesses.

8. A trolley according to any one of claims 1 to 7, characterised in that the connecting points (13) are arranged either in a common plane (17) or in part in a common plane (17) or in different planes.

9. A trolley according to any one of claims 1 to 8, characterised in that each connecting node (10) comprises two halves (10', 10'') and each half (10', 10'') has teeth (25) and, when the halves (10', 10'') are assembled, the surfaces (24) thereof rest against one another and the teeth (25) mesh.

10. A trolley according to any one of claims 1 to 9, characterised in that the connecting points (13) for the front and upper longitudinal members (6 and 8) are provided on one half (10' or 10'') and the connecting point (13) for a rear longitudinal member (7) is provided on the other half (10' or 10'').

11. A trolley according to any one of claims 1 to 10, characterised in that the connecting nodes (10) have a recess (15) for receiving a transverse connecting member (22).

12. A trolley according to any one of claims 1 to 11, characterised in that the connecting nodes (10) are connected by the transverse connecting member (22) so as to be secure against torsion.

## Revendications

1. Chariot de transport (1) déplaçable à la main, notamment chariot à provisions, qui peut présenter un siège pour enfant (21) et dont le châssis (2), pourvu de galets de roulement avant et arrière (3, 4) et constitué d'éléments pouvant être assemblés par emboîtement, porte au moins un récipient (19) et/ou au moins un casier pour recevoir des marchandises, le châssis (2) présentant deux éléments nodaux de liaison (10), destinés à recevoir des longerons avant et supérieurs (6, 8) et pourvus de points de raccordement (13) pour les longerons avant et supérieurs (6, 8), un longeron avant respectif (6) menant des points de raccordement (13) à un des galets de roulement avant (3), et un longeron supérieur respectif (8) menant des points de raccordement (13) vers le haut au récipient (19), **caractérisé** en ce qu'un point de raccordement (13) supplémentaire est prévu sur chaque élément nodal de liaison (10), et ces points de raccordement (13) sont destinés à recevoir des longerons arrière respectifs (7) qui mènent aux galets de roulement arrière (4).

2. Chariot de transport selon la revendication 1, **caractérisé** en ce que les longerons arrière (7) débouchent dans deux supports de galets (18), qui portent les galets de roulement arrière (4).

3. Chariot de transport selon la revendication 1 ou 2, **caractérisé** en ce que les longerons avant (6) débouchent dans deux supports de galets (11), qui portent les galets de roulement avant (3).

4. Chariot de transport selon l'une des revendications 1 à 3, **caractérisé** en ce que les longerons avant (6) sont réunis en un élément porteur en forme d'étrier.

5. Chariot de transport selon l'une des revendications 1 à 3, **caractérisé** en ce que les supports de galets (11) sont reliés par un élément emboîtable de liaison transversale (23).

6. Chariot de transport selon l'une des revendications 1 à 5, **caractérisé** en ce que les points de raccordement (13) présents sur les éléments nodaux de liaison (10) sont réalisés à la manière de tenons.

7. Chariot de transport selon l'une des revendications 1 à 6, **caractérisé** en ce que les points de raccordement (13) présents sur les éléments nodaux de liaison (10) sont formés par des renfoncements.

8. Chariot de transport selon l'une des revendications 1 à 7, **caractérisé** en ce que les points de raccordement (13) sont disposés soit sur un plan commun (17), soit pour partie sur un plan commun (17), soit sur des plans différents.

9. Chariot de transport selon l'une des revendications 1 à 8, **caractérisé** en ce que chaque élément nodal de liaison (10) est constitué de deux moitiés (10', 10'') et chaque moitié (10', 10'') présente une denture (25), les faces (24) des moitiés (10', 10'') étant en application mutuelle à l'état monté des moitiés (10', 10''), et les dentures (25) étant alors en engagement mutuel.

10. Chariot de transport selon l'une des revendications 1 à 9, **caractérisé** en ce que les points de raccordement (13) pour le longeron avant (6) et le longeron supérieur (8) sont prévus sur une moitié (10' ou 10''), et les points de raccordement (13) pour un longeron arrière (7) sont prévus sur l'autre moitié (10' ou 10'').

11. Chariot de transport selon l'une des revendications 1 à 10, **caractérisé** en ce que les éléments nodaux de liaison (10) présentent un renfoncement (15) pour recevoir un élément de liaison transversale (22).

12. Chariot de transport selon l'une des revendications 1 à 11, **caractérisé** en ce que les éléments nodaux de liaison (10) sont reliés par l'élément de liaison transversale (22) en étant bloqués en rotation.
